# EUROPEAN PATENT APPLICATION

(11) **EP 2 642 013 A1**
(43) Date of publication of application: **25.09.2013**
(21) Application number: 13159994.6
(22) Date of filing: 19.03.2013
(51) Int. Cl.: D06F 39/00, D06F 33/02

(54) **Washing machine and controlling method thereof**

(30) Priority: 19.03.2012 KR 20120027994
(71) Applicant: Samsung Electronics Co., Ltd, Gyeonggi-do 443-742 (KR)
(72) Inventor: Kim, Hyun Sook, Gyeonggi-do (KR); Park, Min Jin, Gyeonggi-do (KR); Kang, Min Ji, Seoul (KR); Oh, Chang Ju, Jeollanam-do (KR)
(74) Representative: Hewett, Jonathan Michael Richard

(57) **Abstract**

A washing machine (1) and a controlling method thereof may automatically set a customized washing cycle according to a wearing environment of laundry. The washing machine (1) includes a user input (110) configured to receive wearing environment information of the laundry from a user, and a controller (160) configured to determine washing characteristics of the laundry based on the wearing environment information of the laundry and automatically set a washing cycle based on the washing characteristics of the laundry.

## Description

The present invention relates to a washing machine in which a washing cycle is automatically set according to a laundry material, contaminants of the laundry and a contamination level of the laundry, and a controlling method thereof.

In general, a washing machine is an apparatus including a water tank for storing water (wash water or rinse water), a drum rotatably installed in the water tank to accommodate laundry, and a motor for generating a driving force to rotate the drum. When the cylindrical drum rotates, the laundry in the drum is washed through motion of rising and falling along the inner wall of the drum.

Such a washing machine proceeds with washing in a series of operations of a washing cycle for separating contaminants from laundry with water (wash water) in which detergent is dissolved, a rinsing cycle for rinsing laundry with water (rinse water) with no detergent to remove bubbles or residual detergent from the laundry, and a spin-drying cycle for drying the laundry. Before proceeding with washing in such a series of operations, a user puts laundry into the washing machine.

A conventional washing machine provides a washing cycle in which only the washing time is varied, when the user personally estimates a contamination level of laundry and the estimated contamination level is input by the user. Thus, the conventional washing machine increases or decreases only the washing time of a predetermined interval in the washing cycle according to the contamination level of the laundry, so it is difficult to provide different washing strengths according to the contamination level of the laundry.

In addition, the conventional washing machine provides simple options for the washing operating rate or the increase or decrease of the washing time for different combinations of contaminants according to the living environment or user's characteristics (for example, a wearing environment, major contaminants, contamination levels of the laundry, etc.), or when the contamination level of the laundry is high, provides simply a high-temperature washing cycle. However, if the laundry is made of synthetic fibers or processed materials which can be deformed easily at high temperatures, damage could be incurred to the laundry.

As a factor affecting the washing force according to the kind of contaminants in the laundry, there are factors such as washing temperature and quantity of detergent as well as washing time. Therefore, a conventional washing machine cannot cope with various contaminants and contamination levels just by increasing or decreasing the washing time or raising the washing temperature.

Further, a conventional washing machine has an inconvenience that the user must set various factors of a washing cycle personally and separately to increase the washing force. In addition, since the washing efficiency due to various factors is different according to the characteristics of the major contaminants, it is not easy for the user to personally set an efficient washing cycle.

Additional aspects and/or advantages of one or more embodiments of the present invention will be set forth in part in the description which follows and, in part, will be apparent from the description, or may be learned by practice of one or more embodiments set out in the disclosure. One or more embodiments are inclusive of such additional aspects.

Therefore, it is an aspect of one or more embodiments to provide a washing machine in which a customized washing cycle is automatically set according to a wearing environment of laundry and a controlling method thereof.

In accordance with one aspect of one or more embodiments, a washing machine may include a input configured to receive wearing environment information of the laundry from a user, and a controller configured to determine washing characteristics of the laundry based on the wearing environment information of the laundry and automatically set a washing cycle based on the washing characteristics of the laundry.

The controller may determine at least one of a material of the laundry, a contaminant of the laundry, and a contamination level of the laundry as the washing characteristics of the laundry.

The controller may automatically set at least one factor of a washing temperature, washing time, whether bubble washing is performed, soaking, detergent amount, and additional rinsing in the washing cycle.

The user input may receive information on a type of detergent from the user, and the controller may automatically set the washing cycle to reflect a difference in composition according to the type of detergent.

The user input may receive information on the contamination level of the laundry from the user, and the controller may additionally set the factors of the washing cycle according to the contamination level of the laundry.

In accordance with another aspect of one or more embodiments, a washing machine may include a user input configured to receive information on laundry and user's characteristics from the user, and a controller configured to determine a wearing environment of the laundry corresponding to the information on laundry and user's characteristics, determine washing characteristics of the laundry based on the wearing environment of the laundry, and automatically set a washing cycle based on the washing characteristics of the laundry.

The user input may receive at least one of a material, size, and type of the laundry, and an age, occupation, and life pattern of the user as the information on laundry and user's characteristics from the user.

The controller may determine at least one of a material of the laundry, a contaminant of the laundry, and a contamination level of the laundry as the washing characteristics of the laundry.

The controller may automatically set at least one factor of a washing temperature, washing time, whether bubble washing is performed, soaking, a detergent amount, and additional rinsing in the washing cycle.

The user input may receive information on a type of detergent from the user, and the controller may automatically set the washing cycle to reflect a difference in composition according to the type of detergent.

The user input may receive information on the contamination level of the laundry from the user, and the controller may additionally set the factors of the washing cycle according to the contamination level of the laundry.

In accordance with another aspect of one or more embodiments, a washing machine may include a laundry reader configured to analyze a code of a label attached to laundry to read information of the laundry, and a controller configured to determine a wearing environment of the laundry corresponding to the information of the laundry, determine washing characteristics of the laundry based on the wearing environment information of the laundry, and automatically set a washing cycle based on the washing characteristics of the laundry.

The laundry reader may determine at least one of a material, size, and type of the laundry as the information of the laundry.

The controller may determine at least one of a material of the laundry, a contaminant of the laundry, and a contamination level of the laundry as the washing characteristics of the laundry.

The controller may automatically set at least one factor of a washing temperature, washing time, whether bubble washing is performed, soaking, a detergent amount, and additional rinsing in the washing cycle.

The user input may receive information on a type of detergent from a user, and the controller may automatically set the washing cycle to reflect a difference in composition according to the type of detergent.

The user input may receive information on the contamination level of the laundry from the user, and the controller may additionally set the factors of the washing cycle according to the contamination level of the laundry.

In accordance with another aspect of one or more embodiments, a controlling method of a washing machine may include receiving a wearing environment of laundry from a user, determining washing characteristics of the laundry based on the wearing environment information of the laundry, and automatically setting a washing cycle based on the washing characteristics of the laundry.

In the determining of the washing characteristics of the laundry, at least one of a material of the laundry, a contaminant of the laundry, and a contamination level of the laundry may be determined as the washing characteristics of the laundry.

In the automatic setting of the washing cycle, at least one factor of a washing temperature, washing time, whether bubble washing is performed, soaking, a detergent amount, and additional rinsing may be automatically set in the washing cycle.

In accordance with another aspect of one or more embodiments, a controlling method of a washing machine may include receiving information on laundry and user's characteristics from a user, and determining a wearing environment of the laundry corresponding to the information on laundry and user's characteristics, determining washing characteristics of the laundry based on the wearing environment of the laundry, and automatically setting a washing cycle based on the washing characteristics of the laundry.

In the receiving of the information on laundry and user's characteristics, at least one of a material, size, and type of the laundry, and an age, occupation, and life pattern of the user may be determined as the information on laundry and user's characteristics.

In the determining of the washing characteristics of the laundry, at least one of a material of the laundry, a contaminant of the laundry, and a contamination level of the laundry may be determined as the washing characteristics of the laundry.

In the automatic setting of the washing cycle, at least one factor of a washing temperature, washing time, whether bubble washing is performed, soaking, a detergent amount, and additional rinsing may be automatically set in the washing cycle.

In accordance with another aspect of one or more embodiments, a controlling method of a washing machine may include analyzing a code of a label attached to laundry to read information of the laundry, determining a wearing environment of the laundry corresponding to the information of the laundry, determining washing characteristics of the laundry based on the wearing environment of the laundry, and automatically setting a washing cycle based on the washing characteristics of the laundry.

In the reading of the information of the laundry, at least one of a material, size, and type of the laundry may be read as the information of the laundry.

In the determining of the washing characteristics of the laundry, at least one of a material of the laundry, a contaminant of the laundry, and a contamination level of the laundry may be determined as the washing characteristics of the laundry.

In the automatic setting of the washing cycle, at least one factor of a washing temperature, washing time, whether bubble washing is performed, soaking, a detergent amount, and additional rinsing may be automatically set in the washing cycle.

These and/or other aspects of the invention will become apparent and more readily appreciated from the following description of embodiments, taken in conjunction with the accompanying drawings of which:
FIG. 1 is a perspective view schematically illustrating the appearance of a washing machine according to one or more embodiments;
FIG. 2 is a cross sectional view schematically illustrating the configuration of the washing machine according to one or more embodiments;
FIG. 3 is a block diagram schematically illustrating a control configuration of the washing machine according to one or more embodiments;
FIG. 4 is a table schematically illustrating the major contaminants according to a wearing environment of laundry in the washing machine according to one or more embodiments;
FIG. 5 is a table schematically illustrating a washing cycle according to the contamination level of the laundry in the washing machine according to one or more embodiments;
FIG. 6 is a flow chart schematically illustrating a control method of the washing machine according to one or more embodiments;
FIG. 7 is a flow chart schematically illustrating a control method of the washing machine according to one or more embodiments; and
FIG. 8 is a flow chart schematically illustrating a control method of the washing according to one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

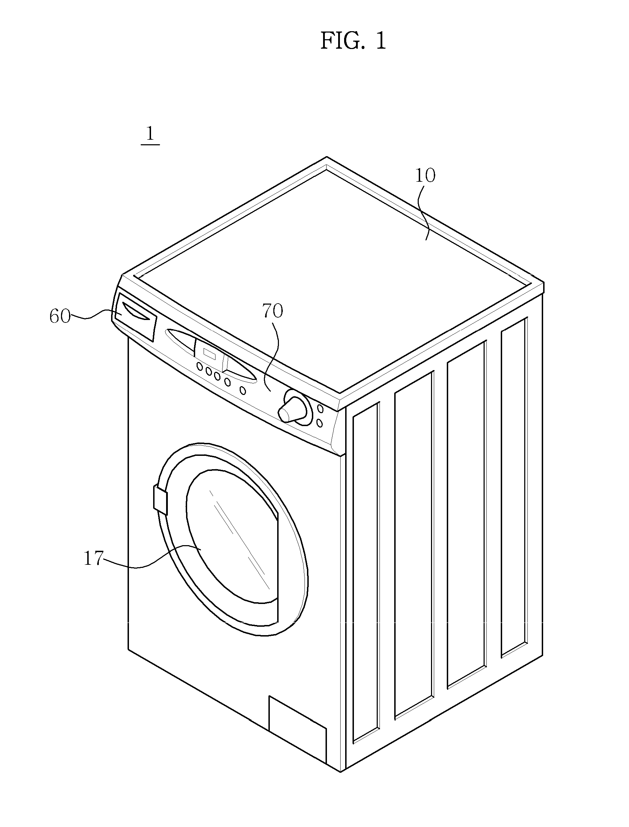

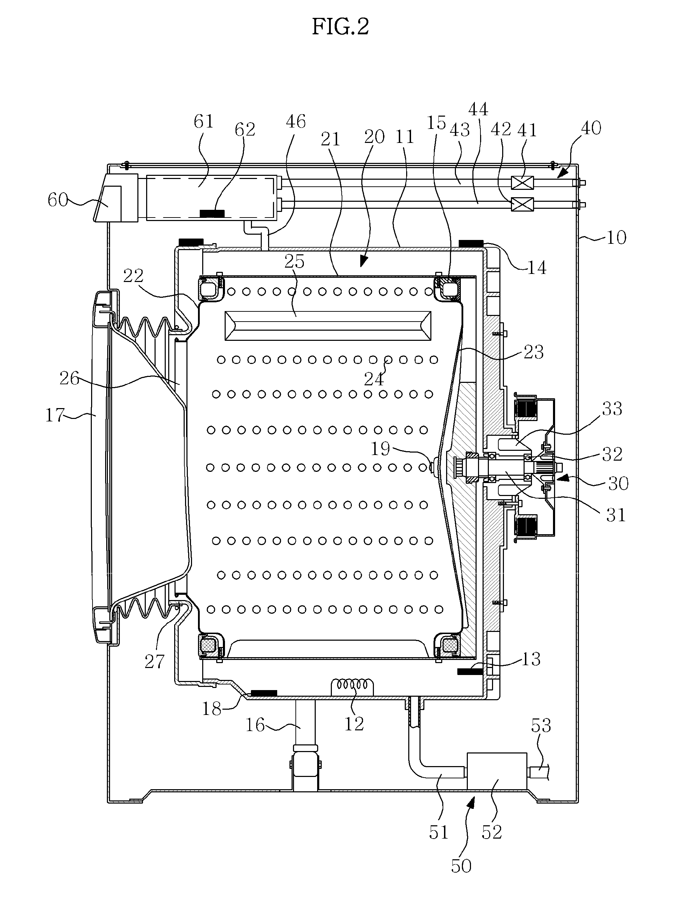

FIG. 1 is a perspective view schematically illustrating the appearance of a washing machine according to one or more embodiments, and FIG. 2 is a cross sectional view schematically illustrating the configuration of the washing machine according to one or more embodiments.

Referring to FIGS. 1 and 2, a washing machine 1 according to one or more embodiments may include a body 10 forming the exterior thereof, a drum type water tank 11 installed in the body 10 to store water (wash water or rinse water), and a cylindrical drum 20 which may be installed rotatably in the water tank 11 and may have a plurality of holes 24 formed therein.

A motor 30 may be installed as a driving device on the outside of the rear portion of the water tank 11, which may rotate a rotary axis 31 connected to the drum 20.

The drum 20 may include a cylinder 21, a front plate 22 disposed on the front of the cylinder 21, and a rear plate 23 disposed on the rear of the cylinder 21. An opening 26 for loading of laundry may be formed in the front plate 22, and the rotary axis 31 for transmitting the power of the motor 30 may be connected to the rear plate 23.

The rotary axis 31 may be disposed between the drum 20 and the motor 30. One end of the rotary axis 31 may be connected to the rear plate 23 of the drum 20, and the other end of the rotary axis 31 may extend outward from the rear wall of the water tank 11. When the rotary axis 31 is driven by the motor 30, the drum 20 connected to the rotary axis 31 may be rotated about the rotary axis 31.

A bearing housing 33 may be installed on the rear wall of the water tank 11 so as to rotatably support the rotary axis 31. The bearing housing 33 may be made of an aluminum alloy, for example, and may be inserted into the rear wall of the water tank 11, for example when the water tank 11 is injection-molded. Bearings 32 may be installed between the bearing housing 33 and the rotary axis 31 so that the rotary axis 31 may rotate smoothly.

During the washing cycle, the drum 20 may be rotated in the normal direction and reverse direction at a low speed by the motor 30. Accordingly, the laundry in the drum 20 may repeat rising and falling motions and contaminants may be removed from the laundry. When the drum 20 is rotated in one direction at a high speed by the motor 30 during the spin-drying cycle, water may be separated from the laundry by the centrifugal force acting on the laundry.

A plurality of holes 24 through which wash water flows may be formed around the drum 20, and a plurality of lifters 25 may be arranged on the inner circumferential surface of the drum 20 so that the laundry may rise and fall when the drum 20 is rotating.

Ring-shaped balancers 15 may be installed on the front and the rear surfaces of the drum 20 concentrically with the rotation center of the drum 20. The balancers 15 may reduce the vibration that may occur due to the asymmetric eccentric structure of the drum 20 itself and the dissymmetry of the laundry in the drum 20.

For the motor 30, a universal motor composed of field coils and an armature or a brushless direct current (BLDC) motor composed of permanent magnets and electric magnets may be used. However, any motor 30 may be used as long as it can be applied to a small and medium drum 20. Here, the RPM and rotation direction of the motor 30 may be controlled according to the intensity and direction of the current supplied to the motor 30. If the current supplied to the motor 30 is cut off, the drive of the motor 30 may be stopped.

A reading device 19 for analyzing a code of a label attached to the laundry may be installed in the drum 20. The reading device 19 may analyze the bar code or image code formed on the label to read information of the laundry.

A water level sensor 13 which may detect the frequency varying according to the water level to detect the volume (level) of the water in the water tank 11, a turbidity sensor 18 for detecting the turbidity of the wash water by irradiating light on the water in the water tank 11, and a heater 12 for heating the water in the water tank 11 may be installed in the lower inside of the water tank 11.

Vibration sensors 14 may be installed on the upper side of the water tank 11. The vibration sensors 14 may be installed at both ends in the forward and backward directions of the water tank 11 to detect the vibration of the water tank 11.

Further, a door 17 may be pivotally installed at the entrance 27 formed in the front portion of the body 10 so that the laundry can be put into the drum 20 or taken out of the drum 20.

A detergent supply device 61 for supplying detergent (for example, synthetic detergent or natural soap detergent), and a water supply device 40 for supplying water (wash water or rinse water) may be installed above the water tank 11.

The inside of the detergent supply device 61 may be partitioned in a plurality of spaces, and the detergent supply device 61 may be installed on the side of the front portion of the body 10 so that the user may put detergent and rinse agents in respective spaces.

Further, a detergent sensor 62 may be installed in the detergent supply device 61 to detect the residual amount or type of detergent. The detergent sensor 62 may include a plurality of electrodes, and the residual amount or type of the detergent may be detected through the resistance value between the plurality of electrodes.

In addition, the water supply device 40 may include outside water supply pipes for supplying water (wash water or rinse water) into the water tank 11, a hot water supply pipe 43 and cold water supply pipe 44 connecting the outside water supply pipes and the detergent supply device 61, a hot water supply valve 41 and cold water supply valve 42 installed midway along the water supply pipes 43 and 44 to adjust the water supply, and a connecting pipe 46 connecting the detergent supply device 61 and the water tank 11. Through such a configuration, the water supplied into the water tank 11 may pass through the detergent supply device 61, so that detergent in the detergent supply device 61 may be supplied to the water tank 11 together with water.

Further, a control panel 70 on which various buttons and a display may be arranged for control of the washing machine 1 may be provided above the front of the body 10, and a detergent input portion 60 which may be connected to the detergent supply device 61 for putting in laundry detergent may be provided on one side of the control panel 70.

Various buttons for receiving user's commands for selecting or controlling the operation of the washing machine 1 and a display for displaying the operation state of the washing machine 1 and the user's manipulation state may be disposed on the control panel 70. Further, the control panel 70 may be composed of various keys, switches, touch pads or the like, and may include all devices for inputting predetermined data by manipulation such as pushing, touching, pressing and rotating.

Further, the washing machine 1 according to one or more embodiments may have a drainage device 50 for draining the water in the water tank 11. The drainage device 50 may include a first drainage pipe 51 connected to the lower portion of the water tank 11 so as to drain the water out of the water tank 11, a drainage pump 52 installed in the first drainage pipe 51, and a second drainage pipe 53 connected to the outlet of the drainage pump 52.

Further, the washing machine 1 according to one or more embodiments may have a damper 16 disposed in the lower portion of the water tank 11 for reducing vibration generated during the operation of washing machine 1. The damper 16 may support the lower portion of the water tank 11 so as to movably support the water tank 11. That is, as the water tank 11 is shaken by the vibration shaking force generated during the rotation of the drum 20, vibration occurs in all directions such as forward, backward, left, right, upward and downward, and such vibration of the water tank 11 may be reduced by the damper 16.

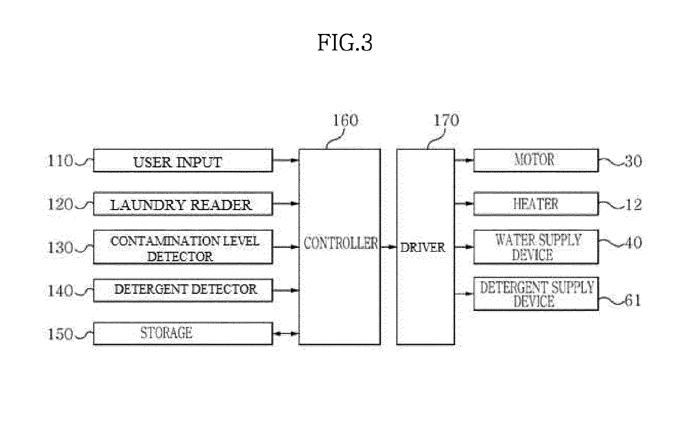

FIG. 3 is a block diagram schematically illustrating a control configuration of the washing machine according to one or more embodiments.

Referring to FIG. 3, the washing machine according to one or more embodiments invention includes an user input 110, a laundry reader 120, a contamination level detector 130, a detergent detector 140, a storage 150, a controller 160, and a driver 170.

The user input 110 may receive operation information on the washing cycle, rinsing cycle and spin-drying cycle of the washing machine from the user. Further, the user input 110 may receive information on the wearing environment in which the user acts wearing the laundry.

Further, the user input 110 may receive clothing classification information of the laundry and information on user's environment from the user. Further, the user input 110 may receive information on the type of detergent or additional information of the contamination level of the laundry from the user.

The laundry reader 120 may read the clothing classification information of the laundry through a label attached to the laundry. The laundry reader 120 may read the clothing classification information of the laundry when the user puts the laundry in the washing machine 1. The clothing classification information of the laundry may include a material, size and type of the laundry.

For this, the laundry reader 120 may include a bar code reader, and by using the bar code reader, it is possible to analyze a bar code of the label attached to the laundry and read information of the laundry through the analyzed results. Further, the laundry reader 120 may include an image sensor, and using the image sensor, it is possible to capture a two-dimensional image code of the label attached to the laundry, and read the information of the laundry by analyzing the imaging results. That is, the laundry reader 120 may include devices that can analyze the code of the label attached to the laundry.

The contamination level detector 130 may include a turbidity sensor 18 for detecting the turbidity of wash water and sensing the contamination level of the laundry based on the detected turbidity of the wash water.

The detergent detector 140 may include a detergent sensor 62 for detecting the type of detergent supplied by the user.

The storage 150 may store a database for classifying the material of the laundry, the contaminants of the laundry and the contamination level of the laundry according to the wearing environment of the laundry.

The major contaminants analyzed according to the wearing environment of the laundry and analyzed data for the effects of each factor on the washing cycle by each contaminant may be stored in the database.

In addition, representative contaminants representing the major contaminants according to the wearing environment of the laundry and data for the optimal washing cycle as a result of analyzing the case in which the degree of influence of the representative contaminant satisfies a predetermined condition (for example, 50% or more), may be stored in the database.

The controller 160, for example, a processor such as a microcomputer, may control the overall operation of the washing machine 1 such as the washing cycle, rinsing cycle and spin-drying cycle according to the input information, and may set the motor RPM and motor operating rate (motor on-off time), a washing temperature, washing time, whether bubble washing is performed, whether soaking of the laundry is performed, a detergent amount, detergent concentration, whether additional rinsing is performed, a rinse water amount, etc. according to the contaminant and contamination level of the laundry in the selected washing course.

Further, the controller 160 may adjust the type and amount of detergent according to the material of the laundry and the contaminant of the laundry so as to possibly properly supply detergent in the selected washing course. The controller 160 may control the effective type and amount of detergent to be displayed on the display of the control panel when the detergent supply cannot be automatically performed.

The driver 170 may drive the motor 30, heater 12, water supply device 40, detergent supply device 61, etc. related to the operation of the washing machine 1 according to the control command of the controller 160.

Next, the control method of the washing machine according to one or more embodiments will be described in detail.

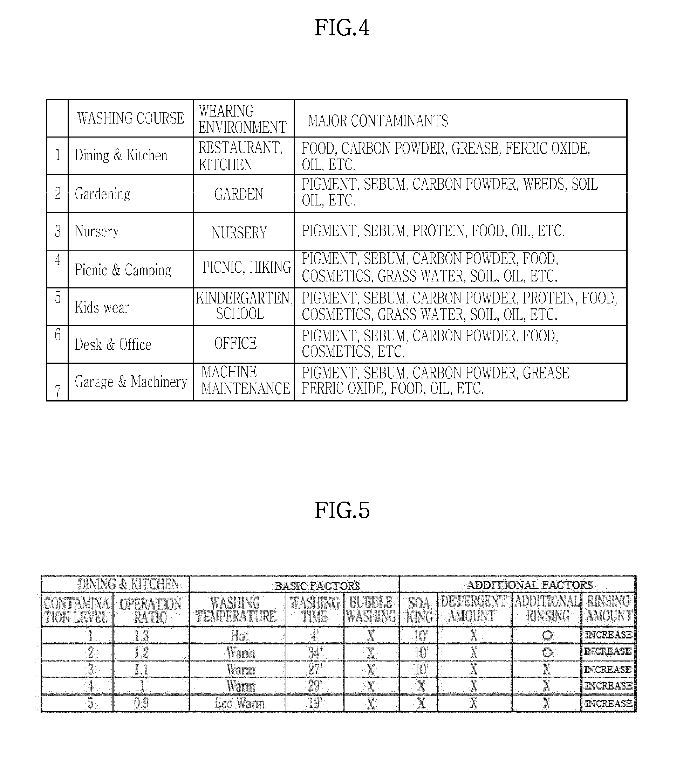

FIG. 4 is a table schematically illustrating example major contaminants according to the wearing environment of the laundry in the washing machine according to one or more embodiments.

Referring to FIG. 4, the washing courses of the washing machine according to one or more embodiments may include, for example, Dining & Kitchen, Gardening, Nursery, Picnic & Camping, Kidswear, Desk & Office, and Garage & Machinery.

Each washing course may illustrate the specific wearing environment of the laundry, and the major contaminants according to the wearing environment of the laundry may include contamination from the user wearing the laundry and contamination from an everyday environment.

Dining & Kitchen is a washing course possibly provided for the case in which the user wore the laundry in the environment such as a dining room or kitchen, and the major latent contaminants may include, for example, food, carbon powder, grease, ferric oxide, oil, etc.

Gardening is a washing course possibly provided for the case in which the user wore the laundry in the environment such as a garden, etc. and the major latent contaminants may include, for example, pigments, sebum, carbon powder, grass water, soil, oil, etc.

Nursery is a washing course possibly provided for the case in which the user wore the laundry in the environment such as a nursery, etc., and the major latent contaminants may include, for example, pigments, sebum, protein, food, oil, etc.

Picnic & Camping is a washing course possibly provided for the case in which the user wore the laundry in the environment such as picnic, hiking, etc., and the major latent contaminants may include, for example, pigments, sebum, carbon powder, food, cosmetics, grass water, soil, oil, etc.

Kidswear is a washing course possibly provided for the case in which the user wore the laundry in the environment such as a kindergarten, school, etc., and the major latent contaminants may include, for example, pigments, sebum, carbon powder, food, cosmetics, grass water, soil, oil, etc.

Desk & Office is a washing course possibly provided for the case in which the user wore the laundry in the environment such as an office, etc., and the major latent contaminants may include, for example, pigments, sebum, carbon powder, food, cosmetics, etc.

Garage & Machinery is a washing course possibly provided for the case in which the user wore the laundry in the environment such as machine maintenance, etc., and the major latent contaminants may include, for example, pigments, sebum, carbon powder, grease, ferric oxide, food, oil, etc.

Thus, according to one or more embodiments, it may be possible to effectively remove the contaminants that could occur in each wearing environment through the customized washing course, possibly without the need for the user to set the washing factors separately when washing the laundry worn in a specific environment.

FIG. 5 is a table schematically illustrating the washing cycle according to the contamination level of the laundry in the washing machine according to one or more embodiments.

Referring to FIG. 5, the washing cycle of the washing machine according to one or more embodiments may be set differently according to the contamination level of the laundry for each washing course of FIG. 4.

The controller 160 may classify the contamination level of the laundry into one to five levels, and may automatically set the basic factors such as a washing temperature, washing time, whether bubble washing is performed, etc. of the washing cycle according to the contamination level of the laundry.

The controller 160 may determine the default value of the contamination level for each washing course based on the information stored in the database. For example, when the washing course of Dining & Kitchen is selected as the wearing environment information of the laundry, the contamination level may be analyzed to be comparatively high according to the environmental factors of a dining or kitchen, so the default value of contamination level may be set at level 3.

In the same manner, when the washing course of Gardening, Kidswear or Garage & Machinery is selected as the wearing environment information of the laundry, the default value of contamination level may be set at level 3, and when the washing course of Nursery or Picnic & Camping is selected as the wearing environment information of the laundry, the default value is may be set at level 2, and when the washing course of Desk & Office is selected as the wearing environment information of the laundry, the default value of the contamination level may be set at level 4.

Further, the controller 160 may set the default value of the contamination level of the laundry by changing it for each washing course when additional information is input for the contamination level of the laundry from the user, or according to the detected results of the contamination level detector 130 for detecting the contamination level of the laundry.

Further, the controller 160 may set the basic factors such as the washing temperature of the washing cycle according to the contamination level of the laundry, and may also set additional factors such as soaking, a detergent amount, whether additional rinsing is performed, and a rinse water amount in the washing cycle so as to be suited to the contamination characteristics of each washing course.

The levels into which the contamination level of the laundry may be classified in the washing machine according to one or more embodiments are not limited to five levels, but may be changed to any number of levels to diversify the washing cycle. Further, the additional factors set in the washing cycle of the washing machine 1 may include all variable factors in the washing cycle of the washing machine 1 such as a mechanical cleaning power (washing operating rate or washing time), rinsing temperature, rinsing mechanical power, the number of rinses, and spin-drying speed, for example.

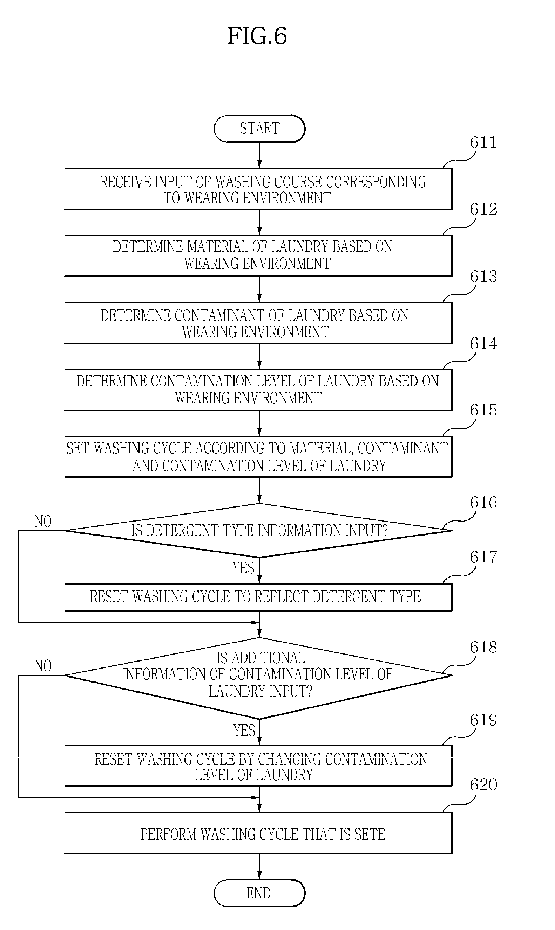

FIG. 6 is a flow chart schematically illustrating a control method of the washing machine according to one or more embodiments.

Referring to FIG. 6, in the control method of the washing machine according to one or more embodiments, first, the user input 110 may receive the washing course corresponding to the wearing environment information of the laundry (611). The user may input information on the environment in which the laundry is worn by operating the control panel 70 of the washing machine 1, and the input wearing environment information of the laundry may be transmitted to the user input 110 from the control panel 70.

At this time, Dining & Kitchen, Gardening, Nursery, Picnic & Camping, Kidswear, Desk & Office and Garage & Machinery, for example, may be displayed on the display of the control panel 70 as the washing course corresponding to the wearing environment information of the laundry, and the user may operate various controls such as keys, switches and touch pads, for example, disposed on the control panel 70 to select any one of the washing courses displayed.

Next, the controller 160 may determine the material of the laundry based on the wearing environment information of the laundry (612). The controller 160 may estimate the material of the laundry corresponding to the wearing environment information of the laundry from the database stored beforehand in the storage 150 or a database connected to the washing machine 1 through a network.

The materials of the laundry corresponding to the wearing environment information of each laundry may be classified and stored in the database. For example, when the washing course of Dining & Kitchen is selected as the wearing environment information of the laundry, data in which blended products of cotton fiber and synthetic fiber make up the most part of the laundry may be stored in the database; and when the washing course of Desk & Office is selected as the wearing environment information of the laundry, data in which the use ratio of synthetic fiber is high as the material of the laundry and the anti-wrinkle processing for the laundry is frequent may be stored in the database.

Next, the controller 160 may determine the contaminants of the laundry based on the wearing environment information of the laundry (613). The controller 160 may estimate the contaminants of the laundry corresponding to the wearing environment information of the laundry from the database stored beforehand in the storage 150 or the database connected to the washing machine 1 through a network.

The contaminants of the laundry corresponding to the wearing environment information of the laundry may be classified and stored in the database. For example, when the washing course of Dining & Kitchen is selected as the wearing environment information of the laundry, stains due to colored food and oil may be estimated as the major contaminants and may be stored in the database; and when the washing course of Desk & Office is selected as the wearing environment information of the laundry, dust originating from an indoor environment, dust, and ink and pencil stains originating from stationery may be estimated as the major contaminants and may be stored in the database.

Next, the controller 160 may determine the contamination level of the laundry based on the wearing environment information of the laundry (614). The controller 160 may estimate the contamination level of the laundry corresponding to the wearing environment information of the laundry from the database stored beforehand in the storage 150 or the database connected to the washing machine 1 through a network.

The contamination levels of the laundry corresponding to the wearing environment information of the laundry may be classified and stored in the database. For example, when the washing course of Dining & Kitchen is selected as the wearing environment information of the laundry, the amount of contamination may be small but the color of stains due to food could be dark, so the contamination level of the laundry could be stored in the database at medium or more (for example, level 2); and in the case the washing course of Desk & Office is selected as the wearing environment information of the laundry, it may be estimated that a little of dust and sebum exist and light ink and pencil stains exist, so the contamination level of the laundry may be stored in the database to be comparatively low (for example, level 4).

Further, the controller 160 may estimate the contamination level by analyzing the size of the laundry and the composition of the laundry read by the laundry reader 120 in addition to the wearing environment information of the laundry. The controller 160 may estimate the contamination level by determining whether the user of the laundry is an adult or an infant through the size of the laundry and the composition of the laundry read by the laundry reader 120. For example, when the user of laundry is determined to be an infant, the controller 160 may determine the contamination level to be higher than when the user of laundry is determined to be an adult.

Next, the controller 160 may automatically set the customized washing cycle according to the material of the laundry, the contaminants of the laundry and the contamination level of the laundry that may be determined (615). In the customized washing cycle, the basic factors such as a washing temperature, washing time, and whether bubble washing is performed and the additional factors such as soaking, an amount of detergent and additional rinsing, for example, may be automatically set in order to remove a plurality of complex contaminants effectively according to the material of the laundry, the contaminants of the laundry and the contamination level of the laundry determined by the controller 160.

Next, the controller 160 may determine whether the detergent type information is input or not (616). When the detergent type information is input by the user, or the detergent type information detected from the detergent detector is input, the controller 160 may reset the customized washing cycle to reflect the detergent type (617). This is because the degree of influence of each laundry factor on the laundry could be changed due to the difference in composition according to the type of detergent.

For example, when the washing course of Dining & Kitchen is selected as the wearing environment information of the laundry, the stains due to colored food and oil are major contaminants as described above, and the amount of contamination may be small but the color of stains, etc. could be darker. However, in such a case, the conventional washing machine provides a washing cycle in which laundry is washed unconditionally at high temperatures and for a long time by setting the washing temperature high and the washing time long.

However, because the blended products of cotton fiber and synthetic fiber may be mainly used in the laundry worn in the environment illustrated in Dining & Kitchen as described above, deformation of the laundry could occur in the washing process if the mechanical cleaning power is added at a high washing temperature. Especially when liquid detergent and a low washing temperature is used because bleach is not used, the conventional washing machine can be deemed to provide an inefficient washing cycle which causes an unnecessary waste of energy.

On the other hand, in the control method of the washing machine according to one or more embodiments, the customized washing cycle may be set to reflect the difference in composition according to the type of detergent. For example, in the case of removing oil stains and color stains using liquid detergent containing no bleach, the controller 160 may set the washing cycle such that soaking is added at a warm washing temperature and the washing time is increased. Such an operation of the controller 160 may be performed based on an ease of removing oil stains even without greatly increasing the washing temperature or mechanical cleaning power in the case of removing such contaminations, and the database in which the result that the effect of removing the color stain is also increased may be stored.

Next, the controller 160 may determine whether additional information on the contamination level of the laundry is input or not (618). When the additional information on the contamination level of the laundry is input by the user, or the additional information on the contamination level of the laundry detected from the contamination level detector 130 is input, the controller 160 may change the contamination level of the laundry determined in the process 640, and may reset the customized washing cycle by revising the basic factors and additional factors of the washing cycle according to the changed contamination level of the laundry (619).

For example, when a washing course of Desk & Office is selected as the wearing environment information of the laundry, the conventional washing machine provided the washing cycle in which the washing operating rate is lowered and the washing time is short so as to correspond to the small amount of contamination without a change to the washing temperature.

On the other hand, in the control method of the washing machine according to one or more embodiments, the basic factors of the washing cycle such as the operating rate, the washing temperature and washing time of the washing cycle may be automatically set in order to effectively remove contaminants according to the material of the laundry. The laundry worn in the environment illustrated in Desk & Office may need a mechanical cleaning power sufficient to bring into contact major contaminants such as dust, sebum and stains due to stationery with the detergent components, and at the same time for removing dust, etc.

However, the wearing environment of Desk & Office may need low temperature washing for prevention of damage to the anti-wrinkle processing of the laundry according to the material of the laundry. Therefore, the controller 160 may set the washing temperature at a temperature (for example, eco-warm level) lower than the general washing temperature (for example, warm level), and may set the washing cycle at a standard washing time of 1.0 level operating rate based on the database in which the above-described data may be stored. Thus, in the laundry worn in the environment illustrated in Desk & Office, it may be possible to prevent a material from being damaged and to remove a plurality of contaminants efficiently.

Further, the controller 160 may set the washing cycle such that rinsing is added to prevent the residue of food separated from the laundry from reattaching to the laundry while the laundry is being washed.

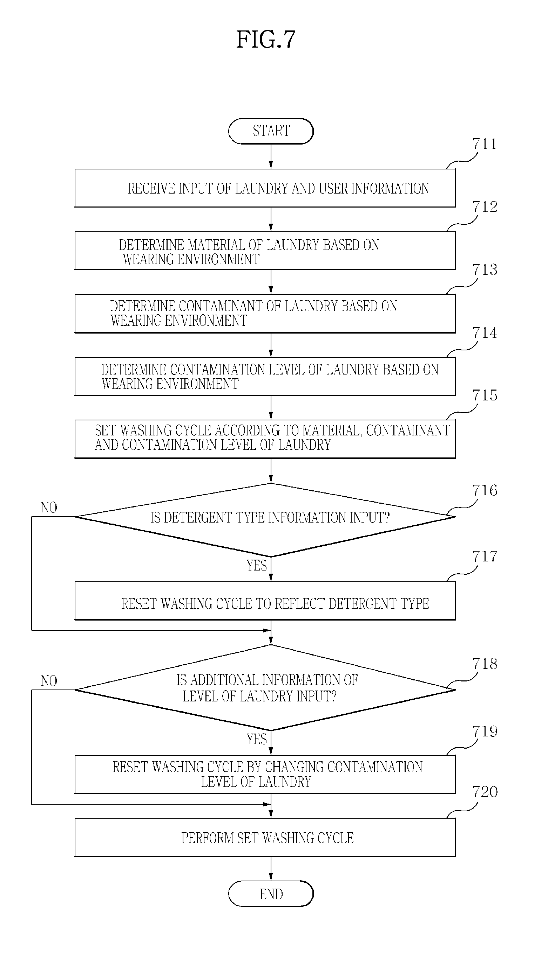

Next, the driver 170 may perform the washing cycle set by the controller 160 (620). The driver 170 may perform the washing cycle by driving the motor 30, heater 12, water supply device 40, and detergent supply device 61 according to the set customized washing cycle. At this time, the controller 160 may adjust an effective type of detergent and an amount of detergent according to the major contaminants of the selected washing course so as to properly supply detergent from the detergent supply device 61. FIG. 7 is a flow chart schematically illustrating a control method of the washing machine according to one or more embodiments.

Referring to FIG. 7, in the control method of the washing machine according to one or more embodiments, first, the user input 110 may receive the clothing classification information of the laundry and user's environment information from the user (711). The user may input the clothing classification information of the laundry and the information on the user's environment information such as the material, size, and type of the laundry, the age, occupation, and life pattern of the user, by operating the control panel 70 of the washing machine 1, and the clothing classification information of the laundry and the user's environment information that are input may be transmitted from the control panel 70 to the user input 110.

At this time, the controller 160 may determine the wearing environment information of the laundry corresponding to the clothing classification information of the laundry and the user's environment information input from the database stored beforehand in the storage 150 or a database connected to the washing machine 1 through a network and may select a washing course corresponding to the determined wearing environment information of the laundry.

The following processes are the same as the processes 612 to 620 of FIG. 6, so detailed description thereof will be omitted.

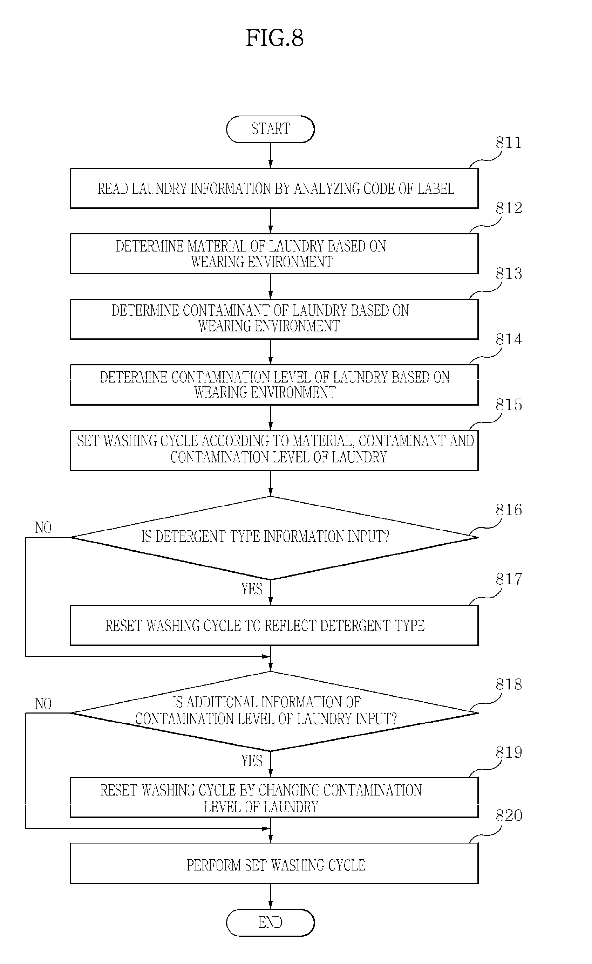

FIG. 8 is a flow chart schematically illustrating a control method of the washing according to one or more embodiments.

Referring to FIG. 8, in the control method of the washing machine according to one or more embodiments, first, the laundry reader 120 may read the clothing classification information of the laundry by analyzing the code of the label attached to the laundry (810). As described above, the laundry reader 120 is not limited to a bar code reader or image sensor, but may include any device that can analyze the code of the label attached to the laundry.

At this time, the controller 160 may determine the wearing environment information of the laundry corresponding to the clothing classification information of the laundry read from the database stored beforehand in the storage 150 or the database connected to the washing machine 1 through a network, and may select a washing course corresponding to the determined wearing environment information of the laundry.

The following processes are the same as the processes 612 to 620 of FIG. 6, so detailed description thereof will be omitted.

In the control method of the washing machine according the one or more embodiments, the process for determining the material of the laundry, the process for determining the contaminants of the laundry, and the process for determining the contamination level of the laundry need not necessarily be performed in a particular order.

Further, in the control method of the washing machine according to one or more embodiments, when the characteristic information of the laundry is input by the user, or when the information of the laundry is read by the laundry reader 120, it may be possible to omit the process in which the controller 160 accesses the database stored beforehand in the storage 150 or the database connected to the washing machine 1 through a network in order to determine the material of the laundry.

In accordance with an aspect of one or more embodiments, since a material of laundry, contaminants and a contamination level of laundry may be determined according to a wearing environment of the laundry, and a washing cycle may be automatically set according to the determined material of laundry, contaminants of the laundry and the contamination level, it may be possible to increase a washing power with an optimal washing cycle according to contaminants and the contamination level of the laundry, without damaging the material of the laundry.

In one or more embodiments, any apparatus, system, element, or interpretable unit descriptions herein include one or more hardware devices or hardware processing elements. For example, in one or more embodiments, any described apparatus, system, element, retriever, pre or post-processing elements, tracker, detector, encoder, decoder, etc., may further include one or more memories and/or processing elements, and any hardware input/output transmission devices, or represent operating portions/aspects of one or more respective processing elements or devices. Further, the term apparatus should be considered synonymous with elements of a physical system, not limited to a single device or enclosure or all described elements embodied in single respective enclosures in all embodiments, but rather, depending on embodiment, is open to being embodied together or separately in differing enclosures and/or locations through differing hardware elements.

In addition to the above described embodiments, embodiments can also be implemented through computer readable code/instructions in/on a non-transitory medium, e.g., a computer readable medium, to control at least one processing device, such as a processor or computer, to implement any above described embodiment. The medium can correspond to any defined, measurable, and tangible structure permitting the storing and/or transmission of the computer readable code.

The media may also include, e.g., in combination with the computer readable code, data files, data structures, and the like. One or more embodiments of computer-readable media include: magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Computer readable code may include both machine code, such as produced by a compiler, and files containing higher level code that may be executed by the computer using an interpreter, for example. The media may also be any defined, measurable, and tangible distributed network, so that the computer readable code is stored and executed in a distributed fashion. Still further, as only an example, the processing element could include a processor or a computer processor, and processing elements may be distributed and/or included in a single device.

The computer-readable media may also be embodied in at least one application specific integrated circuit (ASIC) or Field Programmable Gate Array (FPGA), as only examples, which execute (e.g., processes like a processor) program instructions.

While aspects of the present invention have been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the invention, the scope of which is defined in the claims.

## Claims

1. A washing machine, comprising:
a user input configured to receive a washing course corresponding to a wearing environment information of laundry; and
a controller configured to determine, by way of one or more processors, washing characteristics of the laundry including at least one of a material of the laundry, a contaminant of the laundry, and a contamination level of the laundry based on the wearing environment information of the laundry and automatically set a washing cycle based on the determined washing characteristics of the laundry.

2. The washing machine according to claim 1, wherein the controller automatically sets at least one factor of a washing temperature, washing time, whether bubble washing is performed, soaking, a detergent amount, and additional rinsing in the washing cycle.

3. The washing machine according to claim 2, wherein:
the user input additionally receives information on a type of detergent; and
the controller automatically sets the washing cycle to reflect a difference in composition according to the type of detergent.

4. The washing machine according to claim 2, wherein:
the user input additionally receives information on the contamination level of the laundry; and
the controller additionally sets the factors of the washing cycle according to the contamination level of the laundry.

5. A washing machine, comprising:
a user input configured to receive clothing classification information of laundry and user's environment information; and
a controller configured to determine, by way of one or more processors, a wearing environment of the laundry based on the clothing classification information of the laundry and the user's environment information, determine washing characteristics of the laundry including at least one of a material of the laundry, a contaminant of the laundry, and a contamination level of the laundry based on the determined wearing environment information of the laundry, and automatically set a washing cycle based on the determined washing characteristics of the laundry.

6. The washing machine according to claim 5, wherein the controller automatically sets at least one factor of a washing temperature, washing time, whether bubble washing is performed, soaking, a detergent amount, and additional rinsing in the washing cycle.

7. The washing machine according to claim 6, wherein:
the user input additionally receives information on a type of detergent; and
the controller automatically sets the washing cycle to reflect a difference in composition according to the type of detergent.

8. The washing machine according to claim 6, wherein:
the user input additionally receives information on the contamination level of the laundry; and
the controller additionally sets the factors of the washing cycle according to the contamination level of the laundry.

9. A washing machine, comprising:
a laundry reader configured to analyze a code of a label attached to laundry to read clothing classification information of the laundry; and
a controller configured to determine, by way of one or more processors, a wearing environment of the laundry based on the clothing classification information of the laundry, determine at least one of a material of the laundry, a contaminant of the laundry, and a contamination level of the laundry based on the determined wearing environment information of the laundry, and automatically set a washing cycle based on the determined washing characteristics of the laundry.

10. The washing machine according to claim 9, wherein the controller automatically sets at least one factor of a washing temperature, washing time, whether bubble washing is performed, soaking, a detergent amount, and additional rinsing in the washing cycle.

11. The washing machine according to claim 10, wherein:
the user input additionally receives information on a type of detergent; and
the controller automatically sets the washing cycle to reflect a difference in composition according to the type of detergent

12. The washing machine according to claim 10, wherein:
the user input additionally receives information on the contamination level of the laundry; and
the controller additionally sets the factors of the washing cycle according to the contamination level of the laundry.

13. A controlling method of a washing machine, comprising:
receiving a washing course corresponding to wearing environment information of laundry;
determining, by way of one or more processors, at least one of a material of the laundry, a contaminant of the laundry, and a contamination level of the laundry based on the wearing environment information of the laundry; and
automatically setting a washing cycle based on the determined washing characteristics of the laundry.

14. A controlling method of a washing machine, comprising:
receiving clothing classification information of laundry and user's environment information;
determining a wearing environment of the laundry based on the clothing classification information of the laundry and the user's environment information;
determining, by way of one or more processors, at least one of a material of the laundry, a contaminant of the laundry, and a contamination level of the laundry based on the determined wearing environment information of the laundry; and
automatically setting a washing cycle based on the determined washing characteristics of the laundry.

15. A controlling method of a washing machine, comprising:
analyzing a code of a label attached to laundry to read clothing classification information of the laundry;
determining a wearing environment of the laundry based on the clothing classification information of the laundry;
determining, by way of one or more processors, at least one of a material of the laundry, a contaminant of the laundry, and a contamination level of the laundry based on the determined wearing environment information of the laundry; and
automatically setting a washing cycle based on the determined washing characteristics of the laundry.
